(19) **Europäisches Patentamt / European Patent Office / Office européen des brevets**

(11) **EP 4 188 755 B1**

(12) **FASCICULE DE BREVET EUROPEEN**

(45) Date de publication et mention
de la délivrance du brevet:
**08.05.2024 Bulletin 2024/19**

(21) Numéro de dépôt: **21759107.2**

(22) Date de dépôt: **27.07.2021**

(51) Classification Internationale des Brevets (IPC):
**B60R 22/28** *(2006.01)*    **B60R 22/00** *(2006.01)*

(52) Classification Coopérative des Brevets (CPC):
**B60R 22/28; B60R 22/00**

(86) Numéro de dépôt international:
**PCT/FR2021/051404**

(87) Numéro de publication internationale:
**WO 2022/023667 (03.02.2022 Gazette 2022/05)**

(54) **COMPOSANT MÉCANIQUE PRÉSENTANT UN COUPLE DE ROTATION RÉSISTANT CONTRÔLÉ**

MECHANISCHE KOMPONENTE MIT GESTEUERTEM WIDERSTANDSDREHMOMENT

MECHANICAL COMPONENT HAVING A CONTROLLED RESISTING TORQUE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **29.07.2020 FR 2008014**

(43) Date de publication de la demande:
**07.06.2023 Bulletin 2023/23**

(73) Titulaire: **Lisi Automotive**
**90600 Granvillars (FR)**

(72) Inventeurs:
- **MERCS, David**
  **90000 BELFORT (FR)**
- **BETSCH, Jocelyn**
  **90000 BELFORT (FR)**

(74) Mandataire: **Berger, Helmut**
**Cabinet Weinstein**
**176 avenue Charles de Gaulle**
**92200 Neuilly sur Seine (FR)**

(56) Documents cités:
**WO-A1-2014/163073    WO-A1-2017/162167**

**Description**

**Domaine technique**

L'invention a trait aux dispositifs de sécurité assurant la protection des passagers d'un véhicule automobile lors d'un accident.

L'invention a trait plus particulièrement aux composants mécaniques d'absorption de l'énergie créée par un choc et transmise à un passager par la ceinture de sécurité.

**État de la technique antérieur**

De tels composants mécaniques sont généralement des barres de torsion. Une barre de torsion, disposée dans l'enrouleur de la ceinture de sécurité, permet, en cas d'accident, d'absorber l'énergie du choc par déformation de ladite barre de torsion de sorte à limiter le risque d'enfoncement de la cage thoracique du passager.

Une barre de torsion comprend habituellement un corps longitudinal de révolution. La barre de torsion comprend également deux têtes, chaque tête étant disposée à une des deux extrémités du corps.

Dans un véhicule automobile, généralement, l'une des têtes est solidaire d'une bobine de l'enrouleur, la ceinture de sécurité s'enroulant autour de cette bobine, et l'autre tête est solidaire d'un flasque de l'enrouleur.

En fonctionnement normal de la ceinture de sécurité, la bobine et le flasque sont fixés l'un à l'autre de sorte à ce qu'ils soient mobiles selon une même rotation.

Lors d'un choc, le flasque est bloqué en rotation et la fixation entre la bobine et le flasque est rompue sous la force de rotation exercée par la ceinture sur la bobine à cause du choc. Ainsi, l'énergie de la rotation de la bobine par rapport au flasque est absorbée par déformation de la barre de torsion, cette déformation étant une torsion du corps de la barre.

Ainsi, pour assurer sa fonction, la barre de torsion doit présenter une évolution parfaitement contrôlée de son couple de torsion en fonction de l'angle de rotation d'une de ses têtes par rapport à l'autre. De la même manière, le procédé de fabrication de la barre doit garantir un comportement similaire des barres de torsion quel que soit le lot de fabrication de manière à ce que le couple de torsion soit stabilisé dans le domaine plastique avec une faible variabilité (capabilité Cp > 1,67).

Un procédé de frappe à froid est particulièrement intéressant car il permet à l'aide d'un lopin d'acier faiblement allié de fabriquer une barre de torsion sans perte de matière, contrairement aux procédés d'usinage.

Toutefois, les conditions de fabrication des barres de torsion par frappe à froid, pour respecter simultanément les exigences géométriques au niveau des têtes, du corps, et de la courbe du couple de torsion en fonction de l'angle de rotation, arrivent à une limite notamment :

- Lorsque les conditions de déformation plastique, lors de la fabrication de la barre, entraînent des contraintes internes telles qu'une opération de recuit d'adoucissement est nécessaire pour assurer le bon fonctionnement de la barre de torsion, comme un nombre de tours (angle de rotation) suffisant avant rupture par exemple. Après l'opération de recuit, même si le critère du nombre de tours avant rupture est habituellement respecté, la transition élastoplastique de la barre est généralement très douce, avec une stabilisation assez lente du couple de torsion optimal. Malheureusement, ce type de courbe ne satisfait pas les nouvelles exigences des équipementiers automobiles qui souhaitent disposer de barres très réactives pour lesquelles le couple de torsion stabilisé dans le domaine plastique doit être atteint avant 90° de rotation.
- Quand la différence entre le diamètre extérieur des têtes et le diamètre du corps est trop important (barres avec un couple de torsion faible) pour assurer la fabrication de la barre par frappe à froid sans décohésion de la matière.
- Lorsque l'application finale nécessite plusieurs paliers de couple de torsion avec une même barre, ou une réduction du couple de torsion en fonction de l'angle de rotation, par exemple.

Plusieurs documents de l'art antérieur décrivent des barres de torsion optimisées permettant par exemple d'obtenir une évolution par pallier, croissant, ou décroissant, du couple de torsion en fonction de l'angle de rotation d'une des têtes de la barre par rapport à l'autre. Concernant la revendication 1, D1 divulgue un procédé de fabrication d'un enrouleur d'un moyen de retenue de sécurité, le procédé comprenant une fixation d'une bobine de l'enrouleur autour de laquelle s'enroule le moyen de retenue avec un premier ancrage de l'enrouleur, une fixation d'un flasque de l'enrouleur avec un deuxième ancrage générant un couple résistant à un mouvement relatif de la bobine et du flasque par une rotation relative du premier ancrage et du deuxième ancrage autour d'un axe, dont le procédé comprend un assemblage du premier ancrage avec le deuxième ancrage en sorte de créer une interface à laquelle s'opère ladite rotation et où est généré ledit couple résistant.

Le document US 6,206,315 B1 décrit un système constitué de plusieurs barres de torsion insérées les unes dans les autres sans recourir à un système mécanique complexe. La première barre de torsion est creuse et peut ainsi recevoir plusieurs autres barres de torsion creuses ou pleines, ou présentant une réduction de section locale. Par exemple, dans le cas d'une première barre creuse dans laquelle est insérée une seconde barre creuse avec une épaisseur de parois plus faible, les deux barres étant soudées entre elle aux deux extrémités, la mise en torsion de l'ensemble des deux barres génère un couple de torsion important jusqu'à ce que la barre intérieure et creuse cède, ne laissant qu'un couple de torsion plus faible associé uniquement à la barre creuse extérieure.

Bien qu'intéressante, la solution proposée par le document US 6,206,315 B1 rencontre une limitation de son utilisation avec des barres creuses qui peuvent entrer en flexion (flambage) lors de la torsion du corps des barres. Ainsi, une fabrication reproductible de ce type de barres est délicate à garantir.

Les documents US 2006/0124793 A1 et US 2011/0000996 A1 décrivent des systèmes constitués de plusieurs barres de torsion associées entre elles soit axialement soit en parallèle, chaque barre de torsion ayant une réponse différente en termes de couple.

Bien que permettant de stabiliser plusieurs paliers de couple de torsion avec un système unique, les solutions proposées dans les documents US 2006/0124793 A1 et US 2011/0000996 A1 sont complexes et entrainent un encombrement et un coût de fabrication qui ne sont pas en phase avec les exigences du marché.

Le document US 2014/0263797 A1 décrit une barre de torsion dont le corps présente une fente de manière à générer avec une seule barre de torsion deux paliers de couple de torsion croissant. Au début de la mise en torsion de la barre fendue, la présence de la fente génère un premier couple de torsion C1 jusqu'à ce que la fente se referme au bout d'un nombre de tours qui est fonction de la géométrie de la fente. Une fois la fente refermée, la barre retrouve une continuité de la matière de son corps qui permet de stabiliser un second palier de couple C2, avec C2 > C1 jusqu'à la rupture de la barre au niveau de son corps.

Cette approche est théoriquement intéressante mais présente l'inconvénient majeur de générer une concentration de contrainte importante au niveau des extrémités de la fente du corps de la barre lors de la mise en torsion. Ainsi, les concentrations de contraintes au niveau de la fente ne permettent pas de stabiliser un mécanisme de torsion sur plus de 2 ou 3 tours au maximum, alors qu'une barre de torsion de référence présentant le même diamètre de corps et la même longueur permet d'atteindre 7,5 à 8 tours avant de rompre.

**Résumé de l'invention**

L'invention décrite ci-après permet de résoudre tout ou partie des limitations de fabrication et de comportement des barres de torsion actuelles en proposant un composant mécanique facilement reproductible et dont le couple de rotation résistant est facilement ajustable, à la conception, sur un ou plusieurs paliers et à des angles de rotation prédéterminés.

Dans la suite de la description de l'invention, la notion de couple de rotation résistant ou de couple résistant est préférée à la notion de couple de torsion. En effet, le composant mécanique selon l'invention ne présente pas de torsion d'une de ses parties mais présente une rotation d'une pièce par rapport à une autre pièce avec un couple résistant à cette rotation.

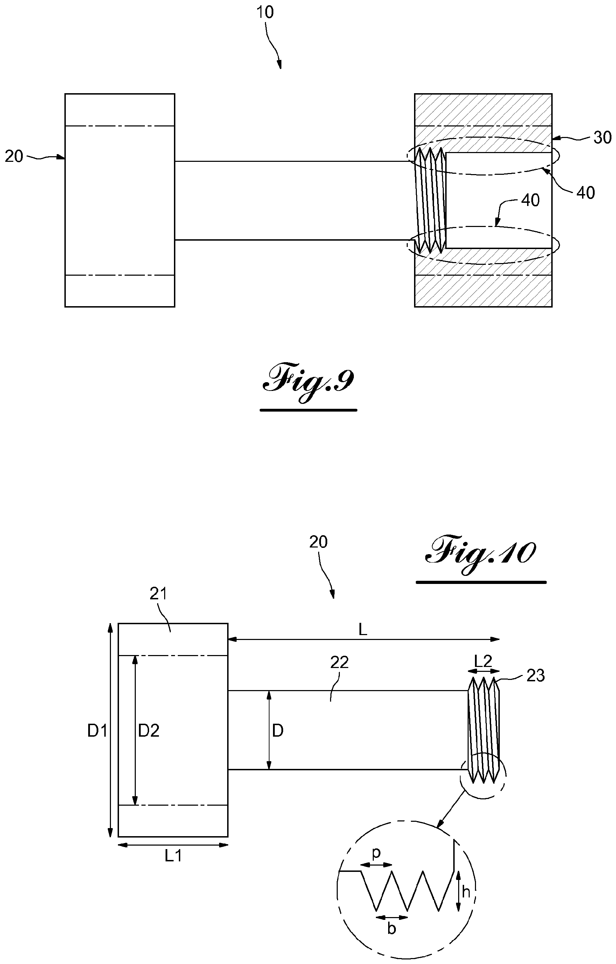

Comme représenté sur les figures 9, 14A, 14B, 17A et 17B, le composant mécanique à couple de rotation résistant 10 comprend deux pièces distinctes qui sont préassemblées mécaniquement entre elles pour assurer la fonction de couple de rotation résistant du composant 10.

Ces deux pièces distinctes sont nommées dans la suite de cette description vis 20 et écrou 30 pour simplifier la compréhension de cette description.

La vis 20 et l'écrou 30 du composant mécanique 10 interagissent mécaniquement entre eux, de telle manière qu'une des deux pièces 20 ou 30 entraine, par rotation, une déformation plastique localisée et contrôlée de la seconde pièce, respectivement 30 ou 20, générant ainsi un couple de rotation résistant. La géométrie ainsi que la résistance mécanique des zones d'interférence mécanique 40 des pièces 20 et 30 permet de contrôler l'évolution du couple résistant en fonction de l'angle de rotation relatif entre les deux pièces 20 et 30 du composant mécanique 10. La pièce 20 ou 30 du composant mécanique présentant la résistance mécanique la plus faible se déforme majoritairement. Ainsi, et avantageusement, une des deux pièces 20 ou 30 du composant présente une résistance mécanique beaucoup plus élevée que celle de la seconde pièce, respectivement 30 ou 20, pour que la déformation plastique soit concentrée sur la seconde pièce 30 ou 20 du composant 10. De cette manière l'évolution du couple de rotation résistant en fonction de l'angle de rotation est mieux contrôlée, et plus reproductible d'un composant mécanique 10 à l'autre.

Pour une spécification d'évolution du couple résistant donnée, présentant une variabilité très faible compte tenu de la maitrise de la composition chimique et/ou des traitements thermiques et/ou de surface associés aux pièces 20 et 30 du composant mécanique 10, l'évolution du couple de rotation résistant en fonction de l'angle de rotation dépend essentiellement de la géométrie des zones d'interférence mécanique 40 des pièces 20 et 30, et donc du volume de matière de la pièce 20 ou 30 présentant la résistance mécanique la plus faible entrainant sa déformation plastique.

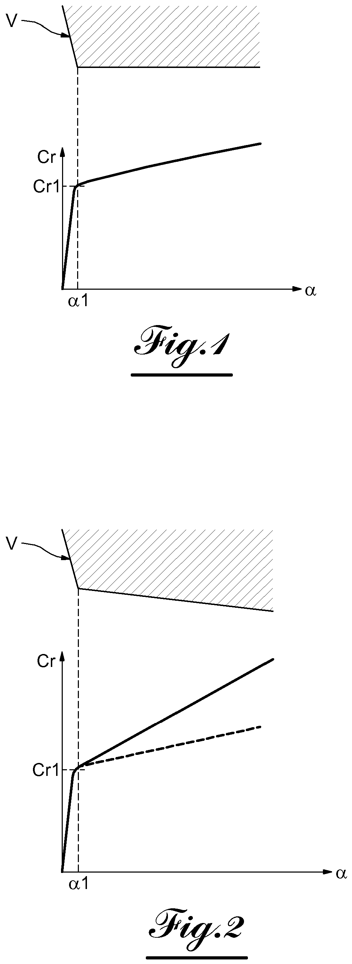

Ainsi, deux familles principales d'interférence mécanique peuvent être décrites. Ces deux familles correspondent à une déformation plastique d'un volume de matière constant d'une des pièces 20 ou 30, comme représenté sur la figure 1, et à une déformation plastique d'un volume de matière variable, croissant ou décroissant d'une des pièces 20 ou 30, comme représenté sur les figures 2 à 7.

Les figures 1 à 7 représentent schématiquement, sur leur partie haute, un volume de matière V déformé plastiquement en fonction d'un angle de rotation $\alpha$ des pièces 20, 30 l'une par rapport à l'autre. Les figures 1 à 7 représentent également schématiquement, sur leur partie basse, un couple de rotation résistant Cr obtenu selon le volume de matière V déformé plastiquement représenté en fonction dudit angle de rotation $\alpha$.

A) Déformation plastique d'un volume de matière constant

Comme le montre schématiquement la figure 1, lors d'une déformation plastique d'un volume de matière V constant, le couple de rotation résistant Cr atteint une première valeur Cr1 après un angle de rotation $\alpha$1. L'angle $\alpha$1 correspond à la fin d'une zone de stabilisation de l'interaction mécanique entre les pièces 20 et 30 (filetage progressif, présence de chanfreins, ...) associée à une augmentation forte du volume V déformé plastiquement pour atteindre une valeur constante du volume V déformé plastiquement . Le couple de rotation résistant Cr augmente ensuite avec l'angle de rotation $\alpha$ en fonction des propriétés d'écrouissage de la pièce 20, 30 qui se déforme plastiquement à volume V constant.

La poursuite de la rotation après l'angle $\alpha$1 entraine une évolution généralement linéaire du couple de rotation résistant, dont la pente est proportionnelle au coefficient d'écrouissage de la matière qui se déforme plastiquement :

[Math 1]

$$\sigma = K.\varepsilon^{n}$$

avec :

$\sigma$ la contrainte appliquée,
K une constante,
$\varepsilon$ la déformation plastique, et
n le coefficient d'écrouissage de la matière qui se déforme plastiquement.

La position angulaire des pièces 20, 30 l'une par rapport à l'autre peut ainsi être choisie lors du pré-assemblage. En effet, si lors du pré-assemblage la déformation plastique est initiée puis interrompue juste après l'angle de rotation $\alpha$1 de manière à stabiliser l'interaction mécanique entre les pièces 20 et 30, la mise en rotation ultérieure des pièces 20, 30 du composant mécanique 10, lors d'un choc, entraînera immédiatement, un couple résistant sensiblement égal à Cr1.

Ainsi, le pré-assemblage permet de régler le niveau de réactivité et de couple résistant initial du composant mécanique 10. Cette remarque reste valable pour tous les cas de figure abordés dans la suite de cette description.

B) Déformation plastique d'un volume de matière variable

Comme l'illustrent les exemples ci-dessous et les figures 2 à 7, lors d'une déformation plastique d'un volume de matière V variable, l'évolution du couple de rotation résistant Cr en fonction de l'angle de rotation $\alpha$ est multiple.

1. Augmentation continue du volume de matière

Une augmentation continue du volume de matière V à déformer plastiquement en fonction de l'angle de rotation $\alpha$ permet d'augmenter la valeur du couple de rotation résistant Cr en fonction de l'angle de rotation $\alpha$, comme représenté sur la figure 2. Ainsi, la pente de la courbe représentative du couple de rotation résistant Cr en fonction de l'angle de rotation $\alpha$ est plus importante que la pente de la courbe représentative à volume constant (illustrée en pointillés) qui est uniquement due à l'écrouissage de la matière qui se déforme, comme le montre schématiquement la figure 2.

2. Augmentation discontinue du volume de matière

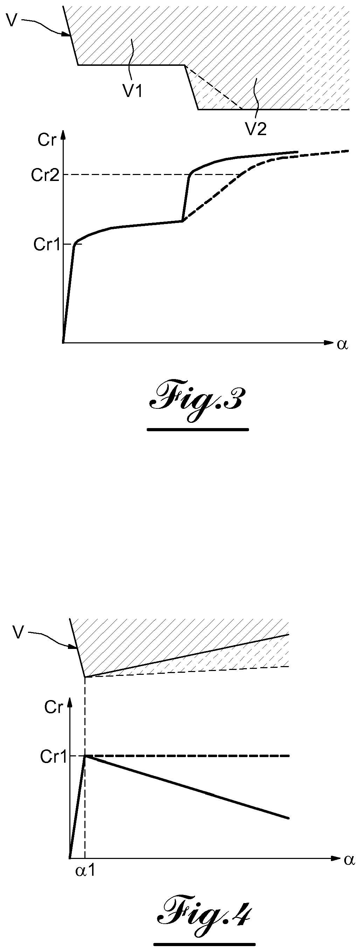

Une augmentation par paliers du volume de matière V à déformer plastiquement en fonction de l'angle de rotation $\alpha$ permet d'obtenir un couple de rotation résistant Cr en fonction de l'angle de rotation $\alpha$ qui présente également plusieurs paliers de résistance croissante. Les paliers du couple résistant Cr sont fonction du nombre de paliers du volume de matière à déformer plastiquement, comme le montre, par exemple, schématiquement la figure 4, pour un volume de matière V comprenant deux paliers successifs V1 et V2, avec V1 < V2.

La transition entre les deux niveaux de couple de rotation résistant (Cr1 et Cr2) peut être plus ou moins douce en fonction de la géométrie de transition entre les volumes V1 et V2, comme représenté par les courbes en traits pleins ou pointillés de la figure 3.

*3. Diminution continue du volume de matière*

Une diminution continue du volume de matière V à déformer plastiquement en fonction de l'angle de rotation $\alpha$ permet, à partir d'un premier couple résistant Cr1 généré par rotation des pièces 20, 30 l'une par rapport à l'autre lors du pré-assemblage, une diminution continue du couple de rotation résistant Cr en fonction de l'angle de rotation $\alpha$, comme le montre schématiquement la figure 4.

Une diminution optimisée, et généralement faible, du volume de matière V à déformer plastiquement permet par exemple de compenser l'augmentation naturelle du couple de rotation résistant Cr dû à l'écrouissage de la matière déformée et de maintenir un couple résistant Cr constant tout au long de la rotation, comme le montrent les courbes en traits pointillés de la figure 4.

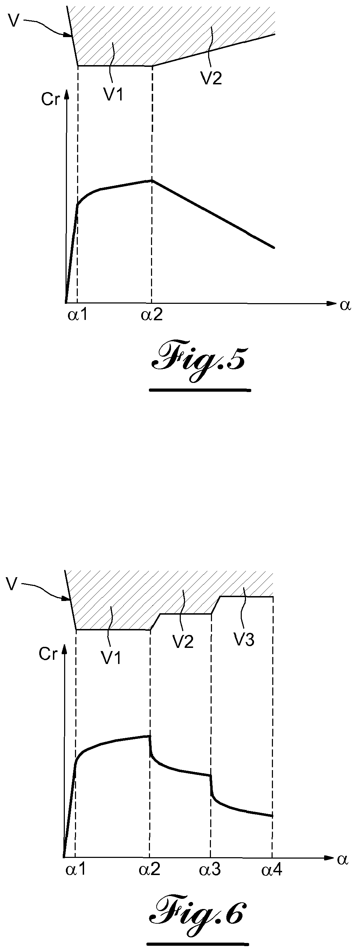

La figure 5 illustre l'association d'un premier volume de matière constant V1 à partir d'un angle de rotation $\alpha1$, suivi d'une diminution constante du volume de matière V2 à déformer à partir d'un angle de rotation $\alpha2$.

Cette association permet d'obtenir une courbe représentative du couple de rotation résistant Cr en fonction de l'angle de rotation $\alpha$ présentant un premier niveau de couple résistant entre les angles de rotation $\alpha1$ et $\alpha2$, suivi d'une diminution continue du couple de rotation résistant.

*4. Diminution discontinue du volume de matière*

Une diminution par paliers du volume de matière V à déformer plastiquement en fonction de l'angle de rotation $\alpha$ permet, après une première déformation plastique à volume constant V1 entre les angles de rotation $\alpha1$ et $\alpha2$, d'obtenir une courbe représentative du couple de rotation résistant Cr en fonction de l'angle de rotation $\alpha$ qui présente plusieurs paliers de couple résistant Cr décroissants. Les paliers du couple résistant Cr sont fonction du nombre de paliers du volume de matière à déformer plastiquement, comme le montre schématiquement la figure 6 pour deux volumes successifs V2 et V3, avec V2 > V3.

*5. Augmentation localisée du volume de matière*

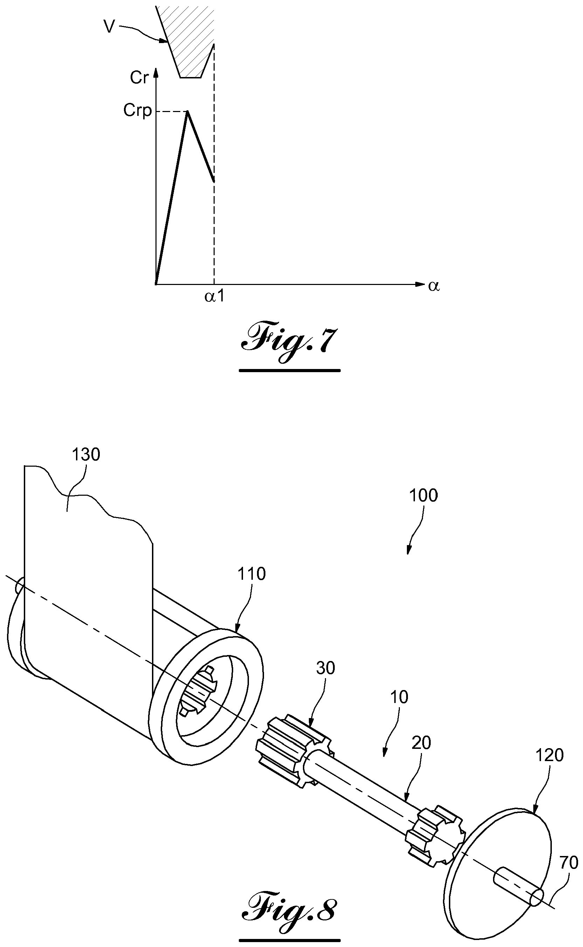

Selon un autre mode de réalisation, une augmentation localisée du volume de matière V à déformer plastiquement en fonction de l'angle de rotation $\alpha$, pour des angles de rotation compris entre $\alpha=0$ et $\alpha=\alpha1$, permet de générer un pic de couple résistant Crp au début de la courbe représentative du couple de rotation résistant Cr en fonction de l'angle de rotation $\alpha$, comme le montre schématiquement la figure 7. Dans ce cas, l'augmentation plus ou moins importante du volume de matière entre $\alpha=0$ et $\alpha=\alpha1$ permet de contrôler la valeur du pic de couple de rotation résistant Crp. De la même manière, l'étendue de la plage angulaire entre $\alpha=0$ et $\alpha=\alpha1$ permet de contrôler la largeur du pic de couple de rotation résistant.

Comme décrit dans les exemples ci-dessus, pour un angle de rotation supérieur à $\alpha1$, l'évolution du couple de rotation résistant Cr en fonction de l'angle de rotation $\alpha$ du composant mécanique 10 se comporte en fonction de la nature du volume de matière V restant à déformer : constant, croissant, ou décroissant.

Les courbes d'évolution du couple de rotation résistant Cr en fonction de l'angle $\alpha$ relatif de rotation entre les pièces 20 et 30 du composant mécanique 10, présentées sur les figues 1 à 7, sont des exemples qui peuvent être représentatifs des comportements souhaités au niveau d'un enrouleur de ceinture de sécurité d'une voiture.

Par exemple, la courbe de la figure 3 permet avec un seul composant mécanique 10 de proposer deux niveaux de réaction du couple de rotation résistant Cr, particulièrement adaptés pour prendre en compte la masse différente de deux passagers différents (enfants et adultes) lors d'un accident nécessitant l'utilisation de la ceinture de sécurité.

La figure 5 permet, dans un autre exemple, d'obtenir une grande réactivité de fonctionnement du composant mécanique 10 pour stabiliser un premier niveau de couple de rotation résistant, puis, à partir d'un certain angle de rotation $\alpha2$, de relâcher progressivement le couple de rotation résistant du composant mécanique 10 de manière à accompagner le déplacement du passager jusqu'à l'airbag lors d'un accident, et donc de limiter les lésions au niveau de sa poitrine causées par une retenue trop brutale.

Toutefois, et d'une manière générale qui peut concerner d'autres applications que celle de l'enrouleur de ceinture de sécurité d'un véhicule automobile, le volume de matière V à déformer plastiquement peut être adapté pour produire n'importe quelle forme de courbe du couple de rotation résistant Cr en fonction de l'angle de rotation $\alpha$.

A titre d'exemple, l'accès à la fabrication additive métallique ou thermoplastique de la partie du composant mécanique soumise à la déformation plastique permet d'envisager une infinité de formes de couple de rotation résistant Cr en fonction de l'angle de rotation α.

Compte tenu de leur conception actuelle, les barres de torsion installées au niveau d'un enrouleur de ceinture de sécurité, sont vouées à la rupture après un nombre de tours minimum, qui dépend des applications, mais qui est généralement supérieur ou égal à 5 tours. Le composant mécanique 10 à couple de rotation résistant selon l'invention, ne casse pas nécessairement pour remplir sa fonction, tant que l'exigence du nombre minimum de tour avec un couple résistant contrôlé est satisfaite. Ceci peut constituer un avantage supplémentaire en limitant les dommages pouvant être générés dans les enrouleurs de ceinture de sécurité par la rupture d'une barre de torsion classique.

Il est proposé, en premier lieu, un procédé de fabrication d'un enrouleur d'un moyen de retenue de sécurité, le procédé comprenant une fixation d'une bobine de l'enrouleur autour de laquelle s'enroule le moyen de retenue avec un premier ancrage d'un composant mécanique de l'enrouleur, une fixation d'un flasque de l'enrouleur avec un deuxième ancrage du composant mécanique, le composant mécanique générant un couple résistant à un mouvement relatif de la bobine et du flasque par une rotation relative du premier ancrage et du deuxième ancrage autour d'un axe.

Un tel procédé de fabrication permet ainsi d'absorber une énergie relative entre un passager, ou un conducteur, et un véhicule de transport lors d'un choc par déformation plastique du composant lors de la rotation du premier ancrage et du deuxième ancrage l'un par rapport à l'autre.

Selon l'invention le procédé comprend un assemblage du premier ancrage avec le deuxième ancrage en sorte de créer une interface à laquelle s'opère ladite rotation et où est généré ledit couple résistant.

Ainsi, le premier ancrage et le deuxième ancrage sont des pièces indépendantes qui, après assemblage, sont mobiles en rotation l'une par rapport à l'autre autour de l'axe lors de la génération du couple résistant. La résistance à cette rotation permet d'absorber l'énergie d'une rotation de la bobine initiée par le moyen de retenue de sécurité. Le composant mécanique est ainsi facilement reproductible et le couple résistant est facilement ajustable, à la conception, sur un ou plusieurs paliers et à des angles de rotation prédéterminés.

Diverses caractéristiques supplémentaires peuvent être prévues, seules ou en combinaison :

- le premier ancrage et le deuxième ancrage comprennent une interface de contact de solide contre solide ;
- la rotation relative du premier ancrage et du deuxième ancrage l'un par rapport à l'autre autour de l'axe déforme plastiquement le premier ancrage et/ou le deuxième ancrage ;
- le procédé comprend une fabrication sur le premier ancrage et/ou sur le deuxième ancrage d'au moins une nervure formant une saignée dans la zone déformée plastiquement respectivement du deuxième ancrage et/ou du premier ancrage ;
- l'épaisseur du premier ancrage perpendiculairement à l'axe et l'épaisseur du deuxième ancrage perpendiculairement à l'axe sont supérieures à la profondeur de la saignée formée par la nervure ;
- le procédé comprend une fabrication d'une sous-zone sur la face du premier ancrage et/ou du deuxième ancrage dans laquelle se forme la saignée et en ce que la fabrication de cette sous-zone et la fabrication de la nervure sont réalisées de sorte que la nervure s'enfonce de plus en plus dans cette sous-zone au fur et à mesure de la rotation relative du premier ancrage et du deuxième ancrage l'un par rapport à l'autre autour de l'axe ;
- le procédé comprend une fabrication d'une sous-zone sur la face du premier ancrage et/ou du deuxième ancrage dans laquelle se forme la saignée et en ce que la fabrication de cette sous-zone et la fabrication de la nervure sont réalisées de sorte que l'enfoncement de la nervure dans cette sous-zone est constant au fur et à mesure de la rotation relative du premier ancrage et du deuxième ancrage l'un par rapport à l'autre autour de l'axe ;
- le procédé comprend une fabrication d'une sous-zone de la face du premier ancrage et/ou du deuxième ancrage dans laquelle se forme la saignée et en ce que la fabrication de cette sous-zone et la fabrication de la nervure sont réalisées de sorte que la nervure s'enfonce de moins en moins dans cette sous-zone au fur et à mesure de la rotation relative du premier ancrage et du deuxième ancrage l'un par rapport à l'autre autour de l'axe ;
- le procédé comprend une fabrication de secteurs angulaires sur la face du premier ancrage et/ou du deuxième ancrage dans laquelle se forme la saignée, les secteurs angulaires présentant divers écartement respectivement avec le deuxième ancrage et/ou avec le premier ancrage dans un plan transversal à l'axe de rotation ;
- la nervure fabriquée sur le premier ancrage est un filetage hélicoïdal et/ou la nervure fabriquée sur le deuxième ancrage est un taraudage hélicoïdal ;
- le premier ancrage et/ou le deuxième ancrage présentent une forme générale de révolution autour de l'axe de rotation ;
- le procédé comprend une fabrication d'une pièce d'usure à usage unique et un assemblage de la pièce d'usure avec le premier ancrage et/ou avec le deuxième ancrage, la pièce d'usure participant à la génération du couple résistant ;
- le premier ancrage et/ou le deuxième ancrage sont fabriqués en alliage métallique et /ou en matériau thermoplastique ;
- le procédé comprend une fabrication d'un corps et d'une tête et un assemblage du corps et de la tête pour former le premier ancrage, le corps et la tête étant mobiles en rotation relativement l'un par rapport à l'autre autour de l'axe et générant en partie le couple résistant.

Il est proposé, en deuxième lieu, un procédé de mise en place dans un véhicule d'un enrouleur fabriqué selon un procédé de fabrication tel que précédemment décrit, le procédé de mise en place comprenant la fixation de l'axe de l'enrouleur à la caisse du véhicule et l'installation d'un airbag dans le véhicule.

Il est proposé, en troisième lieu, un procédé d'amortissement d'un mouvement relatif entre un véhicule et une personne et/ou un objet transporté dans le véhicule lors d'un choc, le procédé comprenant une génération d'un couple résistant par un composant mécanique d'un enrouleur mis en place dans le véhicule selon le procédé de mise en place tel que précédemment décrit, le procédé comprenant, avant la génération dudit couple (Cr) résistant, le maintien de la personne et/ou de l'objet au véhicule par le moyen de retenue de sécurité.

Il est proposé, en quatrième lieu, un enrouleur d'un moyen de retenue de sécurité, l'enrouleur comprenant un composant mécanique, une bobine et un flasque, la bobine et un premier ancrage du composant mécanique étant fixés l'un avec l'autre, le flasque et un deuxième ancrage du composant mécanique étant fixés l'un avec l'autre, le composant mécanique générant un couple résistant à un mouvement relatif de la bobine et du flasque par une rotation relative du premier ancrage et du deuxième ancrage autour d'un axe, le premier ancrage et le deuxième ancrage étant assemblés l'un avec l'autre en sorte de créer une interface à laquelle s'opère ladite rotation et où est généré ledit couple résistant.

Il est proposé, en cinquième lieu, un véhicule comprenant un airbag et un enrouleur d'un moyen de retenue de sécurité tel que précédemment décrit, le moyen de retenue étant une ceinture de sécurité ou un harnais.

**Brève description des dessins**

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant plusieurs modes de réalisation de l'invention et dans lesquels :

[Fig. 1]
[Fig. 2]
[Fig. 3]
[Fig. 4]
[Fig. 5]
[Fig. 6]
[Fig. 7]
[Fig. 12A]
[Fig. 12B]
[Fig. 12C]

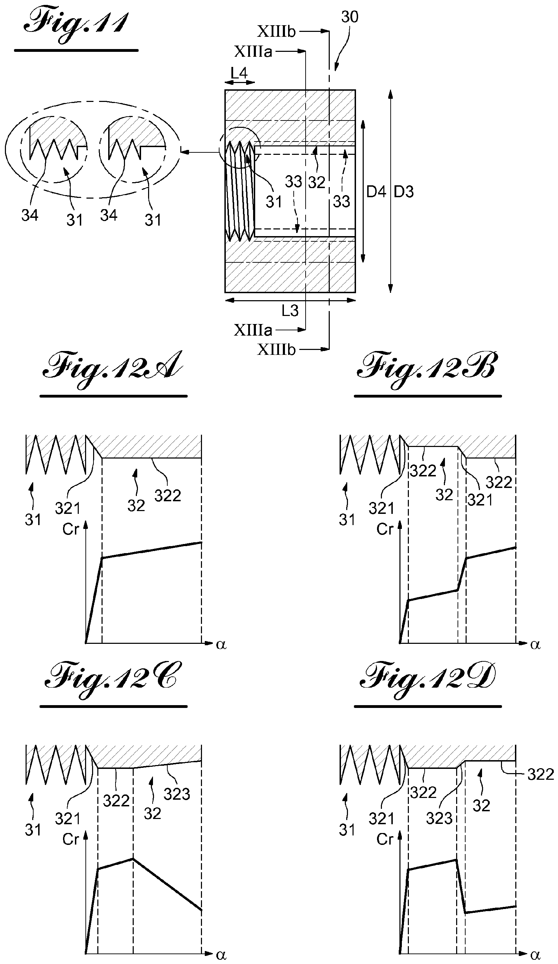

[Fig. 12D] - les figures 1 à 7 et 12A, 12B, 12C, 12D représentent schématiquement, sur leur partie haute, un volume de matière en fonction d'un angle de rotation de deux pièces l'une par rapport à l'autre d'un composant mécanique et, sur leur partie basse, un couple de rotation résistant en fonction dudit angle de rotation ;
[Fig. 8] - La figure 8 est une vue schématique éclatée en perspective de l'intérieur d'un enrouleur de ceinture de sécurité d'un véhicule automobile selon un mode de réalisation, l'enrouleur comprenant le composant mécanique ;
[Fig. 9] - La figure 9 est une vue schématique en coupe du composant mécanique, selon un mode de réalisation ;
[Fig. 10] - La figure 10 est une vue schématique d'une vis du composant mécanique, selon un mode de réalisation ;
[Fig. 11] - La figure 11 est une vue schématique d'un écrou du composant mécanique, selon un mode de réalisation ;
[Fig. 13A] - La figure 13A est une vue schématique en coupe de l'écrou suivant le plan XIIIa-XIIIa de la figure 11 ;
[Fig. 13B] - La figure 13B est une vue schématique en coupe de l'écrou suivant le plan XIIIb-XIIIb de la figure 11 ;
[Fig. 14A]

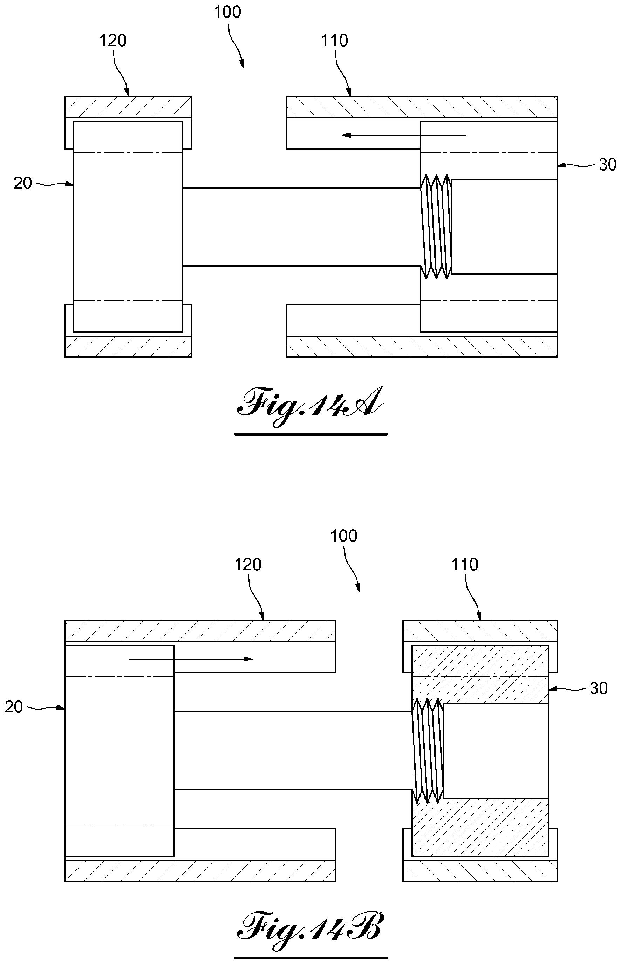

[Fig. 14B] - Les figures 14A et 14B sont des vues schématiques en coupe de l'intérieur de l'enrouleur de ceinture de sécurité d'un véhicule automobile selon deux modes de réalisation différents ;

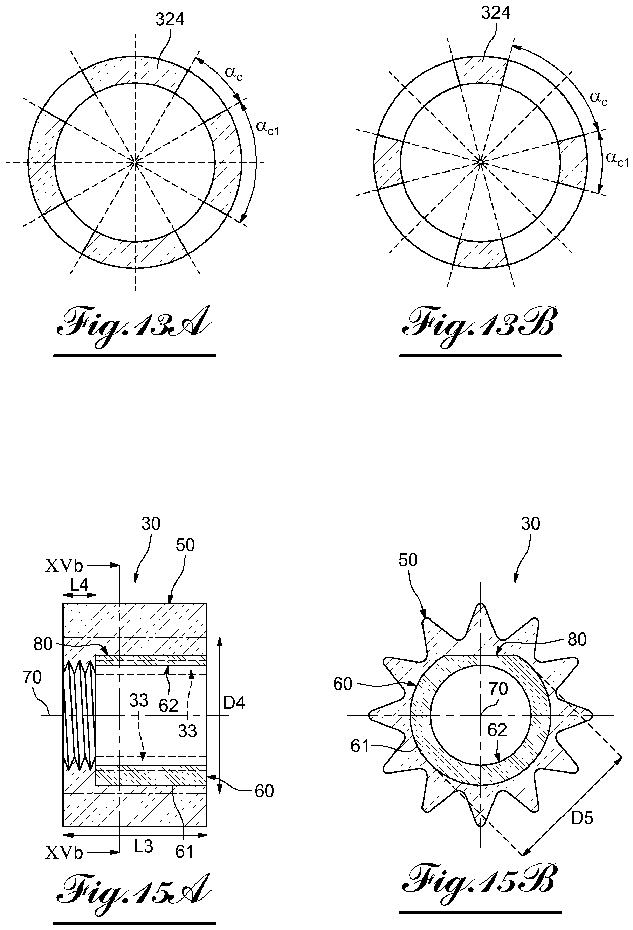

[Fig. 15A] - La figure 15A est une vue schématique d'un écrou du composant mécanique, selon un autre mode de réalisation ;
[Fig. 15B] - La figure 15B est une vue schématique en coupe de l'écrou suivant le plan XVb-XVb de la figure 15A ;

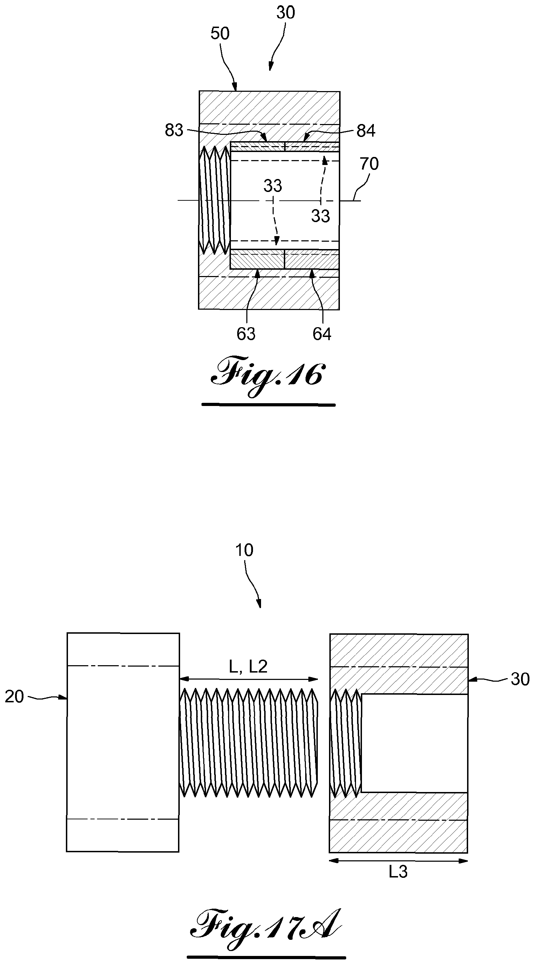

[Fig. 16] - La figure 16 est une vue schématique d'un écrou du composant mécanique, selon un autre mode de réalisation ;
[Fig. 17A]

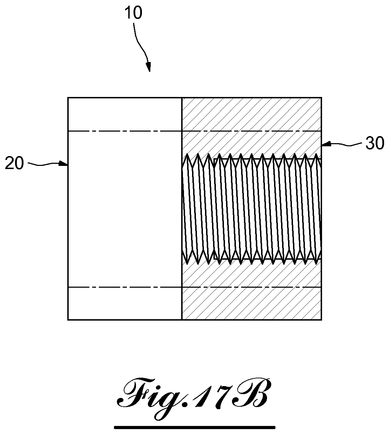

[Fig. 17B] - Les figures 17A et 17B sont des vues schématiques en coupe du composant mécanique, selon un autre mode de réalisation.

**Description détaillée**

Sur la figure 8 est représenté l'intérieur d'un enrouleur 100 d'une ceinture de sécurité 130 d'un véhicule automobile selon un mode de réalisation.

L'enrouleur 100 comprend une bobine 110, un flasque 120, une ceinture de sécurité 130 et un composant mécanique 10.

Le composant mécanique 10 comprend de deux pièces indépendantes 20 et 30 qui présentent une zone d'interférence mécanique 40 lorsqu'elles sont assemblées, comme le montre la figure 9.

Le composant mécanique 10 comprend, selon le mode de réalisation représenté, une vis 20 et un écrou 30, la vis 20 étant destinée à être vissée dans l'écrou 30. La vis 20 comprend une tête 21 et un corps 22 présentant une forme générale cylindrique de longueur L et de diamètre D, la tête 21 étant disposée à une extrémité du corps 22.

Selon le mode de réalisation illustré, l'écrou 30 est solidaire de la bobine 110. La ceinture de sécurité 130 s'enroule autour de cette bobine 110. La tête 21 de la vis 20 est solidaire du flasque 120.

Selon le mode de réalisation représenté en particulier sur la figure 10, la tête 21 de la vis 20 comprend une denture extérieure de type pignon, de largeur L1, et de diamètre D1 avec un diamètre en fond de denture D2 supérieur ou égal à D pour assurer l'entrainement de la barre sans déformation plastique de la tête. Le corps 22 présente au niveau de son extrémité libre un filetage hélicoïdal 23, de longueur L2, inférieure ou égale à L, dont le diamètre en fond de filet est supérieur ou égal à D de manière à ne pas générer une section résistante affaiblie au niveau du corps 22.

Bien que représenté par simplicité sous forme triangulaire, le filetage hélicoïdal 23 est de forme libre (triangulaire, rectangulaire, carré, trapézoïdal, rond, symétrique, dissymétrique, ...), avec une section circulaire, ou multilobée, et est défini par une largeur de filet b, une hauteur de filet h et un pas de filetage p.

Selon le mode de réalisation représenté en particulier sur la figure 11, l'écrou 30 présente une forme tubulaire, ouverte à ses deux extrémités, et comprenant une denture extérieure de type pignon, de largeur L3, et de diamètre D3 avec un diamètre en fond de denture D4 strictement supérieur à :

[Math 2]

$$D + 2.h$$

La denture extérieure de l'écrou 30 peut présenter la même géométrie et les mêmes dimensions que celle de la vis 20.

L'écrou 30 comprend sur une extrémité de son diamètre intérieur une première zone 31 d'une longueur L4 permettant le pré-assemblage entre les pièces 20 et 30. Comme représenté sur les quatre zooms de la zone 31 sur la partie gauche de la figure 11, la première zone 31 comprend un taraudage 34 reprenant la géométrie du filetage 23 pour faciliter l'opération de pré-assemblage.

L'écrou 30 comprend également une deuxième zone 32 intérieure, dans la continuité de la première zone 31, dont la surface, qui peut être de géométrie variable, doit nécessairement s'inscrire dans un volume tubulaire 33 fictif. Le volume tubulaire 33 est représenté par des traits horizontaux en pointillés et représente le volume de matière disponible pour la déformation plastique de la deuxième zone 32 par la partie filetée 23 de la vis 20. Le volume tubulaire 33 fictif présente un diamètre interne strictement supérieur au diamètre D du corps 22 de la vis 20 et un diamètre externe inférieur ou égal à D + 2.h.

Selon le mode de réalisation représenté, la longueur du volume tubulaire 33 est égale à L3 - L4. Selon des modes de réalisation non représentés, la longueur du volume tubulaire 33 est inférieure à L3 - L4.

Comme expliqué précédemment, et pour un couple de résistances mécaniques des pièces 20 et 30 donné, la forme de la courbe représentant le couple de rotation résistant Cr en fonction de l'angle de rotation $\alpha$ dépend du volume de matière à déformer plastiquement qui peut être constant, croissant, ou décroissant. Ainsi, selon les modes de réalisation illustrés sur les figures 12A à 12D, la deuxième zone 32 intérieure comprend différentes sous-zones 321, 322, ou 323 correspondants respectivement à une déformation à volume croissant, à volume constant, et à volume décroissant. Ainsi, la combinaison de plusieurs sous-zones 321, 322, ou 323 de longueurs différentes ou non permet d'obtenir une multitude de formes de courbe représentative du couple de rotation résistant Cr en fonction de l'angle de rotation $\alpha$. La figure 12 montre schématiquement quatre cas d'utilisation possibles.

Comme illustré sur les figures 13A et 13B, un autre type de sous-zone 324, avec une géométrie plus complexe et révélée par une coupe transverse perpendiculaire à l'axe de symétrie de la zone 32, par exemple suivant les plans XIIIa-XIIIa et XIIIb-XIIIb de la figure 11, peut présenter des cannelures internes définies par x secteurs angulaires $\alpha c$ et par y secteurs angulaires $\alpha c1$, respectivement vide, et rempli de matière, avec :

[Math 3]

$$x.\alpha_c + y.\alpha_{c1} = 360°$$

Selon les modes de réalisation représentés sur les figures 13A et 13B, x=4, y=4 et les couples ($\alpha$c, $\alpha$c1) sont égaux à (30°, 60°) et (60°, 30°) respectivement. Ainsi, avec des diamètres intérieurs et extérieurs fixes, la sous-zone à cannelures 324 permet de contrôler le volume de matière disponible pour la déformation plastique, et donc la valeur du couple de rotation résistant Cr, en jouant sur les valeurs x, y, $\alpha$c et $\alpha$c1.

Bien que géométriquement plus complexes, des sous zones à cannelures 324 peuvent être préférées à des sous zones sans discontinuité de matière à ce que les contraintes et l'écrouissage accumulés lors de la déformation plastique des zones remplies de matière $\alpha$c1 puissent être libérés dans les zone vides $\alpha$c. Ainsi, le couple de rotation résistant associé à une sous zone à cannelures 324 est plus stable, et le phénomène de grippage lors du fonctionnement du composant mécanique peut être évité.

Selon des modes de réalisation non représentés, plusieurs sous-zones à cannelures 324 différentes sont disposées les unes à la suite des autres sur la longueur de la deuxième zone 32 de l'écrou 30. Selon des modes de réalisation, une ou plusieurs zones à volume croissant 321, zones à volume constant 322 et/ou zones à volume décroissant 323 sont combinées avec une ou plusieurs zones à cannelures 324.

Pour une géométrie et une résistance mécanique données de la zone 32, le volume maximum potentiellement déformable plastiquement dépend essentiellement de la section longitudinale d'une dent du filetage 23 de la vis 20.

Dans le cas d'un filetage triangulaire cette section est égale à:

[Math 4]

$$\frac{b.h}{2}$$

Ainsi, plus la largeur de filet b et/ou la hauteur de filet h du filetage 23 sont élevées, par exemple, plus le couple résistant sera élevé.

Par ailleurs, la longueur de la deuxième zone 32 divisée par le pas p du filetage hélicoïdal 23 et du taraudage 34 détermine le nombre de tour, disponible pour la rotation relative des pièces 20 et 30 du composant mécanique 10. Selon les modes de réalisation représentés ce nombre de tour est égal à :

[Math 5]

$$\frac{L3 - L4}{p}$$

Naturellement, lors de la déformation plastique de la deuxième zone 32, la longueur du composant mécanique diminue de p millimètres à chaque rotation de 360° entre les pièces 20 et 30. Ainsi, selon un mode de réalisation, le pas du filetage 23 et du taraudage 34 est choisi le plus faible possible tout en garantissant la robustesse mécanique du composant 10.

A titre d'exemple, et pour garantir un fonctionnement du composant mécanique pour un nombre minimal de 7 tours, avec un pas de filetage de 1mm, et 3 filets en prise dans la première zone 31 pour le pré-assemblage des pièces 20 et 30, la longueur L3 devra être strictement supérieure à 10mm, ce qui est comparable avec les largeurs des têtes des barres de torsion actuelles. L'environnement du composant mécanique 10, et notamment les pièces (logements) qui permettent de maintenir la tête 21 de la vis 20 et l'écrou 30 lors de son fonctionnement, doivent tenir compte du raccourcissement de p mm à chaque tour relatif entre les pièces 20 et 30 de manière à éviter la perte d'entrainement en rotation du composant mécanique 10, et par conséquent une défaillance du système de ceinture de sécurité par exemple. Ainsi la vis 20 et/ou l'écrou 30 doivent être libres de translater dans leur logement 110 et/ou 120 lors du fonctionnement du composant mécanique 10, comme le montre schématiquement les figures 14A et 14B.

Selon le mode de réalisation représenté, les logements 110 et 120 des figures 14A et 14B sont respectivement la bobine 110 et le flasque 120 représentés sur la figure 8. Selon des modes de réalisation différents, la vis 20 est fixée à la bobine 110 et l'écrou 30 est fixé au flasque 120.

Selon un mode de réalisation, les pièces 20 et 30 sont réalisées en acier faiblement allié (C4C, C10C, 17B2, 23MnB4), pour des commodités de mise en forme par frappe à froid par exemple. La résistance mécanique finale des pièces 20 ou 30 dépend de leur écrouissage lors de l'opération de mise en forme, mais peut également être ajustée grâce à un traitement thermique de type trempe/revenu, particulièrement adapté aux nuances d'acier avec une teneur en carbone supérieure à 0,15%.

Ainsi, une première des pièces du composant mécanique 10, fabriquée en 23MnB4 et ayant subi un traitement d'austénitisation à 900°C pendant 45 minutes, suivi d'une trempe à l'huile à 60°C et d'un revenu à 430°C présentera une résistance mécanique de 1130Mpa ± 100MPa, alors que la seconde pièce réalisée en C10C sans traitement thermique présentera une résistance mécanique de l'ordre de 350MPa. Dans ces conditions, l'interférence mécanique entre les deux parties du composant 10 entrainera systématiquement la déformation plastique de la partie fabriquée en C10C uniquement.

D'une manière comparable, les pièces 20 et 30 du composant mécanique 10, peuvent également être réalisées avec d'autres alliages métalliques comme les alliages d'aluminium. Dans ce cas, et pour obtenir une différence significative de résistance mécanique entre les deux pièces 20 et 30 du composant mécanique 10, une première des pièces peut être constituée d'aluminium très faiblement allié, et la seconde pièce peut être constituée d'un alliage d'aluminium contenant du silicium, du magnésium et/ou du manganèse, par exemple. Ainsi, ladite première pièce en aluminium de la série 1000 (aluminium presque pur) présente une résistance mécanique voisine de 120MPa alors que la seconde partie réalisée avec un alliage d'aluminium de la série 6000 (alliage d'aluminium, de silicium et de magnésium) présente une résistance mécanique de l'ordre de 300 à 400MPa.

Selon d'autres modes de réalisation, une première des pièces du composant 10, fabriquée en acier faiblement allié avec ou sans traitement thermique, peut être associée à la seconde pièce métallique à base d'aluminium par exemple.

Les différentes géométries de la zone 32 et des sous-zones 321 à 324 de l'écrou 30, présentées précédemment, peuvent facilement être mise en forme par déformation plastique à froid, par exemple, avec une gamme de poinçons et de matrices adaptés. Le procédé de frappe à froid est particulièrement intéressant compte tenu de son rendement matière proche de 100% et de la possibilité de contrôler des tolérances géométriques de l'ordre de la dizaine de micromètre, de manière à avoir la meilleure maitrise possible du couple de rotation résistant par déformation plastique.

Selon des modes de réalisation différents, une première des pièces du composant 10, métallique, peut être associée à la seconde pièce thermoplastique, avec ou sans renfort de fibres courtes, obtenue par injection. Dans ces modes de réalisation, le pré-assemblage entre les deux pièces 20 et 30 du composant mécanique 10 peut avantageusement être réalisé lors de l'opération d'injection, par surmoulage. A titre d'exemple, la seconde pièce du composant mécanique 10 fabriquée en polyamide 66 (PA66) présente une résistance mécanique de l'ordre de 85MPa.

Selon d'autres modes de réalisation représentés en particulier sur les figures 15A et 15B, l'écrou 30 comprend une pièce externe 50 et une pièce interne 60 insérées, possiblement en force, l'une dans l'autre en suivant un même axe 70. La pièce externe 50 conserve, par exemple, la même géométrie de denture externe que l'écrou 30 décrit précédemment, mais présente un alésage de longueur L3 - L4, et de diamètre D5, strictement inférieur au diamètre de fond de denture D4 et strictement supérieur à :

[Math 2]

$$D + 2.h$$

La pièce interne 60 est un tube de longueur L3 - L4, au maximum, avec une surface externe majoritairement circulaire 61 de diamètre D5 avec une tolérance dimensionnelle (ajustement) pour permettre un montage au maillet ou à la presse dans la pièce externe 50. Le réglage de l'ajustement du diamètre D5 de la pièce interne 60, est réalisé en fonction des connaissances de l'homme de métier pour interdire la translation entre les pièces externe 50 et interne 60 lors du fonctionnement du composant mécanique 10.

A l'instar de la deuxième zone 32, une surface interne 62 de la pièce interne 60 présente une forme variable en fonction de la courbe représentative du couple de rotation résistant Cr en fonction de l'angle de rotation α désirée, et est strictement inscrite dans le volume tubulaire 33 décrit précédemment.

Selon le mode de réalisation représenté, les pièces externe 50 et interne 60 sont bloquées en rotation à l'aide d'un méplat 80, interne pour la pièce externe 50 et externe pour la pièce interne 60, pour empêcher tout mouvement relatif de rotation entre les pièces externe 50 et interne 60 lors du fonctionnement du composant mécanique 10. Le méplat 80 peut être remplacé par tout élément ou adaptation de la géométrie de la surface externe de la pièce interne 60 empêchant la rotation relative des pièces externe 50 et interne 60 (géométrie 6 pans par exemple).

Pour le mode de réalisation représenté sur les figures 15A et 15B, la vis 20 et la pièce externe 50 de l'écrou 30 du composant mécanique 10 présentent une géométrie fixe. La géométrie de la pièce interne 60 s'adapte en fonction du type de courbe représentative du couple de rotation résistant Cr en fonction de l'angle de rotation α souhaité. Ainsi, et après un premier fonctionnement, le composant mécanique 10 peut être réutilisé simplement en replaçant la pièce interne 60.

Selon un mode de réalisation, la vis 20 et la pièce externe 50 de l'écrou 30 sont fabriquées en acier faiblement alliés et subissent un traitement de trempe et revenu de manière à leur conférer une résistance mécanique optimisée, comprise entre 600 et 1200Mpa par exemple, de manière à permettre une utilisation multiple du composant mécanique 10 sans altération des propriétés mécaniques et géométriques de la vis 20 et de la pièce externe 50. La pièce interne 60 de l'écrou 30 peut être fabriquée en acier faiblement allié sans traitement thermique, en alliage d'aluminium, ou en thermoplastique en fonction des exigences concernant les niveaux de couple à atteindre lors du fonctionnement du composant mécanique 10.

Selon un autre mode de réalisation, la pièce interne 60 comprend un empilement de plusieurs anneaux 63 et 64, sans limitation du nombre d'anneaux successifs, présentant les mêmes diamètres extérieur et intérieur mais dont les résistances mécaniques sont différentes. A l'instar de la pièce interne 60 lorsqu'elle est monobloc, les anneaux 63 et 64 comprennent un méplat 83 et 84 ou toute adaptation de la géométrie de leur surface externe empêchant la rotation relative de pièce externe 50 et des anneaux 63 et 64. Ainsi, pour une déformation plastique à volume constant des anneaux 63 et 64 il est possible de générer une augmentation ou une diminution par paliers du couple de rotation résistant.

Selon différents modes de réalisation, et sans limitation de la nature des matériaux utilisés, les anneaux 63 et 64 sont respectivement constitués d'un acier faiblement allié sans traitement thermique et d'un alliage d'aluminium, ou d'un alliage d'aluminium et d'un thermoplastique, ou d'un thermoplastique chargé et d'un thermoplastique non chargé, pour obtenir une courbe représentative du couple de rotation résistant Cr en fonction de l'angle de rotation $\alpha$ avec deux paliers de couple résistant successifs Cr1 et Cr2 avec Cr1 > Cr2. L'inversion des matériaux utilisés pour les anneaux 63 et 64 des trois exemples précédents permet d'obtenir une autre courbe représentative du couple de rotation résistant Cr en fonction de l'angle de rotation $\alpha$ avec deux paliers de couple résistant successifs Cr1 et Cr2 avec Cr1 < Cr2.

Selon un autre mode de réalisation représenté sur les figures 17A et 17B, les longueurs L, L2 et L3 peuvent avantageusement être égales de manière à produire le composant mécanique 10 le plus compact possible, limitant ainsi la masse apportée par le composant 10 dans le véhicule et l'encombrement au niveau de l'enrouleur 100 de la ceinture de sécurité 130 par exemple.

A l'aide des descriptions précédentes, et des différents exemples associés, l'homme de métier saura transposer sans difficulté les différents modes de réalisation d'un composant mécanique 10 à couple résistant pour lequel un écrou 30, monobloc ou non, est déformé plastiquement par un filetage 23 d'une vis 20 à un autre composant mécanique 10 pour lequel une vis 20 est déformée plastiquement et localement par un taraudage 34 d'un écrou 30.

Selon des modes de réalisation non représentés, le composant mécanique 10 comprend une tige filetée et deux écrous se vissant à chaque extrémité de la tige filetée. Par analogie avec les modes de réalisation représentés, la tige filetée est assimilée au corps 22 de la vis 20, l'un des écrous est assimilé à la tête 21 de la vis 20 et le deuxième écrou est assimilé à l'écrou 30.

Les écrous d'un tel mode de réalisation, comprennent un taraudage à pas identique ou différent et/ou la tige filetée comprend un ou plusieurs filetages à pas identiques ou différents.

Selon un autre mode de réalisation non représenté, le composant mécanique 10 comprend un corps tubulaire dans lequel viennent se visser, à chaque extrémité du corps, deux vis.

Les vis d'un tel mode de réalisation, comprennent un filetage à pas identique ou différent et/ou le corps tubulaire comprend un ou plusieurs taraudages identiques ou différents.

Selon un mode de réalisation non représenté, le composant mécanique 10 comprend une vis, un écrou et un corps. La vis est vissée dans une extrémité tubulaire du corps et l'écrou est vissé sur l'autre extrémité du corps.

La vis et l'écrou d'un tel mode de réalisation, comprennent respectivement un filetage et un taraudage à pas identique ou différent.

Selon des modes de réalisation non représentés, le couple Cr résistant est créé par frottement et/ou par abrasion des deux pièces 20, 30 l'une contre l'autre. Ces deux pièces 20, 30 ne comprenant pas forcément de filetage ou de taraudage.

Selon des modes de réalisation non représentés, la pièce 20 et/ou la pièce 30 ne présente pas une forme de révolution mais une forme arquée autour de l'axe de rotation 70 des pièces 20, 30 l'une par rapport à l'autre.

## Revendications

1.  Procédé de fabrication d'un enrouleur (100) d'un moyen de retenue de sécurité (130), le procédé comprenant une fixation d'une bobine (110) de l'enrouleur (100) autour de laquelle s'enroule le moyen de retenue (130) avec un premier ancrage (20, 30) d'un composant mécanique (10) de l'enrouleur (100), une fixation d'un flasque (120) de l'enrouleur (100) avec un deuxième ancrage (30, 20) du composant mécanique (10), une rotation relative du premier ancrage (20, 30) et du deuxième ancrage (30, 20) autour d'un axe (70) générant un couple (Cr) résistant à un mouvement relatif de la bobine (110) et du flasque (120), dont le procédé comprend un assemblage du premier ancrage (20, 30) avec le deuxième ancrage (30, 20) en sorte de créer une interface entre le premier ancrage (20, 30) et le deuxième ancrage (30, 20) à laquelle s'opère ladite rotation et où est généré ledit couple (Cr) résistant, **caractérisé en ce que** la rotation relative du premier ancrage (20, 30) et du deuxième ancrage (30, 20) l'un par rapport à l'autre autour de l'axe (70) déforme plastiquement le premier ancrage (20, 30) et/ou le deuxième ancrage (30, 20).

2.  Procédé de fabrication selon la revendication précédente, **caractérisé en ce que** le premier ancrage (20, 30) et le deuxième ancrage (30, 20) comprennent une interface de contact de solide contre solide.

3.  Procédé de fabrication selon la revendication précédente, **caractérisé en ce qu'**il comprend une fabrication sur le premier ancrage (20, 30) et/ou sur le deuxième ancrage (30, 20) d'au moins une nervure (23, 34) formant une saignée dans la zone déformée plastiquement respectivement du deuxième ancrage (30, 20) et/ou du premier ancrage (20, 30).

4.  Procédé de fabrication selon la revendication précédente, **caractérisé en ce que** l'épaisseur du premier ancrage (20, 30) perpendiculairement à l'axe (70) et l'épaisseur du deuxième ancrage (30, 20) perpendiculairement à l'axe (70) sont supérieures à la profondeur de la saignée formée par la nervure (23, 34).

5.  Procédé de fabrication selon l'une quelconque des revendications 3 ou 4, **caractérisé en ce qu'**il comprend une fabrication d'une sous-zone (321) sur la face du premier ancrage (20, 30) et/ou du deuxième ancrage (30, 20) dans laquelle se forme la saignée et **en ce que** la fabrication de cette sous-zone (321) et la fabrication de la nervure (23, 34) sont réalisées de sorte que la nervure (23, 34) s'enfonce de plus en plus dans cette sous-zone (321) au fur et à mesure de la rotation relative du premier ancrage (20, 30) et du deuxième ancrage (30, 20) l'un par rapport à l'autre autour de l'axe (70).

6.  Procédé de fabrication selon l'une quelconque des revendications 3 à 5, **caractérisé en ce qu'**il comprend une fabrication d'une sous-zone (322) sur la face du premier ancrage (20, 30) et/ou du deuxième ancrage (30, 20) dans laquelle se forme la saignée et **en ce que** la fabrication de cette sous-zone (322) et la fabrication de la nervure (23, 34) sont réalisées de sorte que l'enfoncement de la nervure (23, 34) dans cette sous-zone (322) est constant au fur et à mesure de la rotation relative du premier ancrage (20, 30) et du deuxième ancrage (30, 20) l'un par rapport à l'autre autour de l'axe (70).

7.  Procédé de fabrication selon l'une quelconque des revendications 3 à 6, **caractérisé en ce qu'**il comprend une fabrication d'une sous-zone (323) de la face du premier ancrage (20, 30) et/ou du deuxième ancrage (30, 20) dans laquelle se forme la saignée et **en ce que** la fabrication de cette sous-zone (323) et la fabrication de la nervure (23, 34) sont réalisées de sorte que la nervure (23, 34) s'enfonce de moins en moins dans cette sous-zone (323) au fur et à mesure de la rotation relative du premier ancrage (20, 30) et du deuxième ancrage (30, 20) l'un par rapport à l'autre autour de l'axe (70).

8.  Procédé de fabrication selon l'une quelconque des revendications 3 à 7, **caractérisé en ce qu'**il comprend une fabrication de secteurs angulaires ($\alpha$c, $\alpha$c1) sur la face du premier ancrage (20, 30) et/ou du deuxième ancrage (30, 20) dans laquelle se forme la saignée, les secteurs angulaires ($\alpha$c, $\alpha$c1) présentant divers écartements respectivement avec le deuxième ancrage (30, 20) et/ou avec le premier ancrage (20, 30) dans un plan transversal (XIIIa-XIIIa, XIIIb-XIIIb) à l'axe (70) de rotation.

9.  Procédé de fabrication selon l'une quelconque des revendications 3 à 8, **caractérisé en ce que** la nervure fabriquée sur le premier ancrage (20, 30) est un filetage (23) hélicoïdal et/ou la nervure fabriquée sur le deuxième ancrage (30, 20) est un taraudage (34) hélicoïdal.

10. Procédé de fabrication selon l'une quelconque des revendications précédentes, **caractérisé en ce que** le premier ancrage (20, 30) et/ou le deuxième ancrage (30, 20) présentent une forme générale de révolution autour de l'axe (70) de rotation.

11. Procédé de fabrication selon l'une quelconque des revendications précédentes, **caractérisé en ce qu'**il comprend une fabrication d'une pièce d'usure (60) à usage unique et un assemblage de la pièce d'usure (60) avec le premier ancrage (20, 30) et/ou avec le deuxième ancrage (30, 20), la pièce d'usure (60) participant à la génération du couple (Cr) résistant.

**12.** Procédé de fabrication selon l'une quelconque des revendications précédentes, **caractérisé en ce que** le premier ancrage (20, 30) et/ou le deuxième ancrage (30, 20) sont fabriqués en alliage métallique et /ou en matériau thermoplastique.

**13.** Procédé de fabrication selon l'une quelconque des revendications précédentes, **caractérisé en ce qu'**il comprend une fabrication d'un corps (22) et d'une tête (21) et un assemblage du corps (22) et de la tête (21) pour former le premier ancrage (20, 30), le corps (22) et la tête (21) étant mobiles en rotation relativement l'un par rapport à l'autre autour de l'axe (70) et générant en partie le couple (Cr) résistant.

**14.** Procédé de mise en place dans un véhicule d'un enrouleur (100) fabriqué selon un procédé de fabrication selon l'une quelconque des revendications précédentes, le procédé de mise en place comprenant la fixation de l'axe (70) de l'enrouleur (100) à la caisse du véhicule et l'installation d'un airbag dans le véhicule.

**15.** Procédé d'amortissement d'un mouvement relatif entre un véhicule et une personne et/ou un objet transporté dans le véhicule lors d'un choc, le procédé comprenant une génération d'un couple (Cr) résistant par un premier ancrage (20, 30) et un deuxième ancrage (30, 20) d'un composant mécanique (10) d'un enrouleur (100) mis en place dans le véhicule selon le procédé de mise en place selon la revendication précédente, le procédé comprenant, avant la génération dudit couple (Cr) résistant, le maintien de la personne et/ou de l'objet au véhicule par le moyen de retenue de sécurité (130).

**16.** Enrouleur (100) d'un moyen de retenue de sécurité (130), l'enrouleur (100) comprenant un composant mécanique (10) comportant un premier ancrage (20, 30) et un deuxième ancrage (30, 20), une bobine (110) et un flasque (120), la bobine (110) et le premier ancrage (20, 30) étant fixés l'un avec l'autre, le flasque (120) et le deuxième ancrage (30, 20) étant fixés l'un avec l'autre, une rotation relative du premier ancrage (20, 30) et du deuxième ancrage (30, 20) autour d'un axe (70) générant un couple (Cr) résistant à un mouvement relatif de la bobine (110) et du flasque (120) apte à déformer plastiquement le premier ancrage (20, 30) et/ou le deuxième ancrage (30, 20), l'enrouleur (100) étant dont le premier ancrage (20, 30) et le deuxième ancrage (30, 20) sont assemblés l'un avec l'autre en sorte de créer une interface entre le premier ancrage (20, 30) et le deuxième ancrage (30, 20) à laquelle s'opère ladite rotation et où est généré ledit couple (Cr) résistant.

**17.** Véhicule comprenant un airbag et un enrouleur (100) d'un moyen de retenue de sécurité (130) selon la revendication précédente, le moyen de retenue étant une ceinture de sécurité ou un harnais.

**Patentansprüche**

**1.** Verfahren zur Herstellung einer Aufrollvorrichtung (100) eines Sicherheitsrückhaltemittels (130), wobei das Verfahren eine Befestigung einer Spule (110) der Aufrollvorrichtung (100) umfasst, um die sich das Rückhaltemittel (130) mit einer ersten Verankerung (20, 30) einer mechanischen Komponente (10) der Aufrollvorrichtung (100) aufrollt, eine Befestigung eines Flansches (120) der Aufrollvorrichtung (100) mit einer zweiten Verankerung (30, 20) der mechanischen Komponente (10), wobei eine relative Drehung der ersten Verankerung (20, 30) und der zweiten Verankerung (30, 20) um eine Achse (70) ein Drehmoment (Cr) generiert, das einer relativen Bewegung der Spule (110) und des Flansches (120) standhält, wobei das Verfahren einen Zusammenbau der ersten Verankerung (20, 30) mit der zweiten Verankerung (30, 20) umfasst, um eine Schnittstelle zwischen der ersten Verankerung (20, 30) und der zweiten Verankerung (30, 20) zu erzeugen, an der die Drehung stattfindet, und an der das Widerstandsdrehmoment (Cr) generiert wird, **dadurch gekennzeichnet, dass** die relative Drehung der ersten Verankerung (20, 30) und der zweiten Verankerung (30, 20) mit Bezug aufeinander um die Achse (70) die erste Verankerung (20, 30) und/oder die zweite Verankerung (30, 20) plastisch verformt.

**2.** Verfahren zur Herstellung nach dem vorhergehenden Anspruch, **dadurch gekennzeichnet, dass** die erste Verankerung (20, 30) und die zweite Verankerung (30, 20) eine Kontaktschnittstelle von Feststoff gegen Feststoff umfassen.

**3.** Verfahren zur Herstellung nach dem vorhergehenden Anspruch, **dadurch gekennzeichnet, dass** es eine Herstellung auf der ersten Verankerung (20, 30) und/oder auf der zweiten Verankerung (30, 20) mindestens einer Rippe (23, 34) umfasst, die eine Nut in der plastisch verformten Zone der zweiten Verankerung (30, 20) und/oder der ersten Verankerung (20, 30) bildet.

4. Verfahren zur Herstellung nach dem vorhergehenden Anspruch, **dadurch gekennzeichnet, dass** die Dicke der ersten Verankerung (20, 30) senkrecht zur Achse (70) und die Dicke der zweiten Verankerung (30, 20) senkrecht zur Achse (70) grösser als die Tiefe der Nut sind, die durch die Rippe (23, 34) gebildet wird.

5. Verfahren zur Herstellung nach einem der Ansprüche 3 oder 4, **dadurch gekennzeichnet, dass** es eine Herstellung einer Teilzone (321) auf der Fläche der ersten Verankerung (20, 30) und/oder der zweiten Verankerung (30, 20) umfasst, in der die Nut gebildet wird, und dadurch, dass die Herstellung dieser Teilzone (321) und die Herstellung der Rippe (23, 34) derart durchgeführt werden, dass die Rippe (23, 34) immer mehr in diese Teilzone (321) während der relativen Drehung der ersten Verankerung (20, 30) und der zweiten Verankerung (30, 20) mit Bezug aufeinander um die Achse (70) eindringt.

6. Verfahren zur Herstellung nach einem der Ansprüche 3 bis 5, **dadurch gekennzeichnet, dass** es eine Herstellung einer Teilzone (322) auf der Fläche der ersten Verankerung (20, 30) und/oder der zweiten Verankerung (30, 20) umfasst, in der die Nut gebildet wird, und dadurch, dass die Herstellung dieser Teilzone (322) und die Herstellung der Rippe (23, 34) derart durchgeführt werden, dass das Eindringen der Rippe (23, 34) in diese Teilzone (322) während der relativen Drehung der ersten Verankerung (20, 30) und der zweiten Verankerung (30, 20) mit Bezug aufeinander um die Achse (70) konstant ist.

7. Verfahren zur Herstellung nach einem der Ansprüche 3 bis 6, **dadurch gekennzeichnet, dass** es eine Herstellung einer Teilzone (323) der Fläche der ersten Verankerung (20, 30) und/oder der zweiten Verankerung (30, 20) umfasst, in der die Nut gebildet wird, und dadurch, dass die Herstellung dieser Teilzone (323) und die Herstellung der Rippe (23, 34) derart durchgeführt werden, dass die Rippe (23, 34) immer weniger in diese Teilzone (323) während der relativen Drehung der ersten Verankerung (20, 30) und der zweiten Verankerung (30, 20) mit Bezug aufeinander um die Achse (70) eindringt.

8. Verfahren zur Herstellung nach einem der Ansprüche 3 bis 7, **dadurch gekennzeichnet, dass** es eine Herstellung von Winkelabschnitten ($\alpha c$, $\alpha c\ 1$) auf der Fläche der ersten Verankerung (20, 30) und/oder der zweiten Verankerung (30, 20) umfasst, in der die Nut gebildet wird, wobei die Winkelabschnitte ($\alpha c$, $\alpha c\ 1$) verschiedene Abweichungen mit Bezug auf die zweite Verankerung (30, 20) und/oder die erste Verankerung (20, 30) auf einer Querebene (XIIIa-XIIIa, XIIIb-XIIIb) zur Drehachse (70) aufweisen.

9. Verfahren zur Herstellung nach einem der Ansprüche 3 bis 8, **dadurch gekennzeichnet, dass** die Rippe, hergestellt auf der ersten Verankerung (20, 30), ein spiralförmiges Gewinde (23) ist, und/oder die Rippe, hergestellt auf der zweiten Verankerung (30, 20), eine spiralförmige Gewindebohrung (34) ist.

10. Verfahren zur Herstellung nach einem der vorhergehenden Ansprüche, **dadurch gekennzeichnet, dass** die erste Verankerung (20, 30) und/oder die zweite Verankerung (30, 20) eine allgemeine Form der Drehung um die Drehachse (70) aufweisen.

11. Verfahren zur Herstellung nach einem der vorhergehenden Ansprüche, **dadurch gekennzeichnet, dass** es eine Herstellung eines Verschleißteiles (60) zur einmaligen Verwendung und einen Zusammenbau des Verschleißteiles (60) mit der ersten Verankerung (20, 30) und/oder mit der zweiten Verankerung (30, 20) umfasst, wobei das Verschleißteil (60) an der Generierung des Widerstandsdrehmoments (Cr) beteiligt ist.

12. Verfahren zur Herstellung nach einem der vorhergehenden Ansprüche, **dadurch gekennzeichnet, dass** die erste Verankerung (20, 30) und/oder die zweite Verankerung (30, 20) aus einer Metalllegierung und/oder aus thermoplastischem Material hergestellt sind.

13. Verfahren zur Herstellung nach einem der vorhergehenden Ansprüche, **dadurch gekennzeichnet, dass** es eine Herstellung eines Körpers (22) und eines Kopfs (21) und einen Zusammenbau des Körpers (22) und des Kopfs (21) umfasst, um die erste Verankerung (20, 30) zu bilden, wobei der Körper (22) und der Kopf (21) in Drehung in Bezug aufeinander um die Achse (70) beweglich sind und das Widerstandsdrehmoment (Cr) teilweise generieren.

14. Verfahren zur Implementierung einer Aufrollvorrichtung (100) in einem Fahrzeug, hergestellt gemäß einem Verfahren zur Herstellung nach einem der vorhergehenden Ansprüche, wobei das Verfahren zur Implementierung die Befestigung der Achse (70) der Aufrollvorrichtung (100) an die Fahrzeugkarosserie und die Installation eines Airbags im Fahrzeug umfasst.

**15.** Verfahren zur Dämpfung einer relativen Bewegung zwischen einem Fahrzeug und einer Person und/oder einem Gegenstand, der im Fahrzeug transportiert wird, bei einem Aufprall, wobei das Verfahren die Generierung eines Widersandsdrehmoments (Cr) durch eine erste Verankerung (20, 30) und eine zweite Verankerung (30, 20) einer mechanischen Komponente (10) einer Aufrollvorrichtung (100) umfasst, die im Fahrzeug gemäß dem Verfahren zur Implementierung nach dem vorhergehenden Anspruch implementiert wird, wobei das Verfahren vor der Generierung des Widerstandsdrehmoments (Cr) das Festhalten der Person und/oder des Gegenstands im Fahrzeug mit Hilfe des Sicherheitsrückhaltemittels (130) umfasst.

**16.** Aufrollvorrichtung (100) eines Sicherheitsrückhaltemittels (130), wobei die Aufrollvorrichtung (100) eine mechanische Komponente (10) umfasst, umfassend eine erste Verankerung (20, 30) und eine zweite Verankerung (30, 20), eine Spule (110) und einen Flansch (120), wobei die Spule (110) und die erste Verankerung (20, 30) miteinander befestigt sind, wobei der Flansch (120) und die zweite Verankerung (30, 20) miteinander befestigt sind, wobei eine relative Drehung der ersten Verankerung (20, 30) und der zweiten Verankerung (30, 20) um eine Achse (70) ein Widerstandsdrehmoment (Cr) mit einer relativen Bewegung der Spule (110) und des Flansches (120) generiert, die dazu ausgelegt ist, die erste Verankerung (20, 30) und/oder die zweite Verankerung (30, 20) plastisch zu verformen, wobei sich die Aufrollvorrichtung (100) dort befindet, wo die erste Verankerung (20, 30) und die zweite Verankerung (30, 20) miteinander zusammengebaut sind, um eine Schnittstelle zwischen der ersten Verankerung (20, 30) und der zweiten Verankerung (30, 20) zu erzeugen, an der die Drehung stattfindet, und oder an der das Widerstandsdrehmoment (Cr) generiert wird.

**17.** Fahrzeug, umfassend einen Airbag und eine Aufrollvorrichtung (100) eines Sicherheitsrückhaltemittels (130) nach dem vorhergehenden Anspruch, wobei das Rückhaltemittel ein Sicherheitsgurt oder ein Anschnallgurt ist.

**Claims**

**1.** A method of manufacturing a reel (100) of a safety restraint means (130), the method comprising attaching a spool (110) of the reel (100) around which the restraint means (130) winds with a first anchor (20, 30) of a mechanical component (10) of the reel (100), attaching a flange (120) of the reel (100) with a second anchor (30, 20) of the mechanical component (10), a relative rotation of the first anchor (20, 30) and of the second anchor (30, 20) about an axle (70) generating a torque (Cr) resisting a relative movement of the reel (110) and the flange (120), whereof the method comprises an assembly of the first anchor (20, 30) with the second anchor (30, 20) so as to create an interface between the first anchor (20, 30) and the second anchor (30, 20) at which said rotation takes place and where said resisting torque (Cr) is generated, **characterized in that** the relative rotation of the first anchor (20, 30) and the second anchor (30, 20) with respect to one another about the axle (70) plastically deforms the first anchor (20, 30) and/or the second anchor (30, 20).

**2.** The manufacturing method according to the preceding claim, **characterized in that** the first anchor (20, 30) and the second anchor (30, 20) comprise a solid-to-solid contact interface.

**3.** The manufacturing method according to the preceding claim, **characterized in that** it comprises manufacturing, on the first anchor (20, 30) and/or on the second anchor (30, 20), at least one rib (23, 34) forming a groove in the plastically deformed zone respectively of the second anchor (30, 20) and/or of the first anchor (20, 30).

**4.** The manufacturing method according to the preceding claim, **characterized in that** the thickness of the first anchor (20, 30) perpendicular to the axle (70) and the thickness of the second anchor (30, 20) perpendicular to the axle (70) are greater than the depth of the groove formed by the rib (23, 34).

**5.** The manufacturing method according to any one of claims 3 or 4, **characterized in that** it comprises manufacturing a sub-zone (321) on the face of the first anchor (20, 30) and/or of the second anchor (30, 20) in which the groove is formed and **in that** the manufacture of this sub-zone (321) and the manufacture of the rib (23, 34) are carried out so that the rib (23, 34) sinks deeper and deeper into this sub-zone (321) over the course of the relative rotation of the first anchor (20, 30) and the second anchor (30, 20) with respect to one another about the axle (70).

**6.** The manufacturing method according to any one of claims 3 to 5, **characterized in that** it comprises manufacturing a sub-zone (322) on the face of the first anchor (20, 30) and/or of the second anchor (30, 20) in which the groove is formed and **in that** the manufacture of this sub-zone (322) and the manufacture of the rib (23, 34) are carried out so that the sinking in of the rib (23, 34) in this sub-zone (322) is constant over the course of the relative rotation of the first anchor (20, 30) and the second anchor (30, 20) with respect to one another about the axle (70).

7. The manufacturing method according to any one of claims 3 to 6, **characterized in that** it comprises manufacturing a sub-zone (323) of the face of the first anchor (20, 30) and/or of the second anchor (30, 20) in which the groove is formed and **in that** the manufacture of this sub-zone (323) and the manufacture of the rib (23, 34) are carried out so that the rib (23, 34) sinks less and less into this sub-zone (323) over the course of the relative rotation of the first anchor (20, 30) and the second anchor (30, 20) with respect to one another about the axle (70).

8. The manufacturing method according to any one of claims 3 to 7, **characterized in that** it comprises manufacturing angular sectors ($\alpha c$, $\alpha c1$) on the face of the first anchor (20, 30) and/or of the second anchor (30, 20) in which the groove is formed, the angular sectors ($\alpha c$, $\alpha c1$) having various spacings respectively with the second anchor (30, 20) and/or with the first anchor (20, 30) in a plane (XIIIa-XIIIa, XIIIb-XIIIb) transverse to the rotation axle (70) .

9. The manufacturing method according to any one of claims 3 to 8, **characterized in that** the rib produced on the first anchor (20, 30) is a helical thread (23) and/or the rib produced on the second anchor (30, 20) is a helical tapping (34).

10. The manufacturing method according to any one of the preceding claims, **characterized in that** the first anchor (20, 30) and/or the second anchor (30, 20) have a general shape of revolution about the rotation axle (70).

11. The manufacturing method according to any one of the preceding claims, **characterized in that** it comprises manufacturing a single-use wearing part (60) and assembling the wearing part (60) with the first anchor (20, 30) and/or with the second anchor (30, 20), the wearing part (60) contributing to generating the resisting torque (Cr).

12. The manufacturing method according to any one of the preceding claims, **characterized in that** the first anchor (20, 30) and/or the second anchor (30, 20) are manufactured from a metal alloy and/or from a thermoplastic material.

13. The manufacturing method according to any one of the preceding claims, **characterized in that** it comprises manufacturing a body (22) and a head (21) and assembling the body (22) and the head (21) to form the first anchor (20, 30), the body (22) and the head (21) being rotatable relative to one another about the axle (70) and partly generating the resisting torque (Cr).

14. A method for installing, in a vehicle, a reel (100) manufactured according to a manufacturing method according to any one of the preceding claims, the installing method comprising attaching the axle (70) of the reel (100) to the body of the vehicle and installing an airbag in the vehicle.

15. A method for damping a relative movement between a vehicle and a person and/or an object transported in the vehicle during an impact, the method comprising generating a resisting torque (Cr) by a first anchor (20, 30) and a second anchor (30, 20) of a mechanical component (10) of a reel (100) installed in the vehicle according to the installing method according to the preceding claim, the method comprising, before generating said resisting torque (Cr), securing the person and/or the object to the vehicle by the safety restraint means (130).

16. A reel (100) of a safety restraint means (130), the reel (100) comprising a mechanical component (10) including a first anchor (20, 30) and a second anchor (30, 20), a spool (110) and a flange (120), the spool (110) and the first anchor (20, 30) being attached together, the flange (120) and the second anchor (30, 20) being attached together, a relative rotation of the first anchor (20, 30) and of the second anchor (30, 20) about an axle (70) generating a torque (Cr) resisting a relative movement of the spool (110) and of the flange (120) able to plastically deform the first anchor (20, 30) and/or the second anchor (30, 20), the reel (100) being whose first anchor (20, 30) and second anchor (30, 20) are assembled with one another so as to create an interface between the first anchor (20, 30) and the second anchor (30, 20) at which said rotation takes place and where said resisting torque (Cr) is generated.

17. A vehicle comprising an airbag and a reel (100) of a safety restraint means (130) according to the preceding claim, the restraint means being a seat belt or a harness.

*Fig.1*

*Fig.2*

_Fig.3_

_Fig.4_

*Fig.5*

*Fig.6*

$$\mathcal{F}ig.7$$

$$\mathcal{F}ig.8$$

$\mathscr{Fig.9}$

$\mathscr{Fig.10}$

# *Fig.11*

# *Fig.12A*

# *Fig.12B*

# *Fig.12C*

# *Fig.12D*

324

$\alpha_c$

$\alpha_{c1}$

*Fig.13A*

324

$\alpha_c$

$\alpha_{c1}$

*Fig.13B*

30

50

XVb

L4

80

70

33 62

33

D4

60

XVb

L3 61

*Fig.15A*

30

50

80

60

70

62

61

D5

*Fig.15B*

_Fig.14A_

_Fig.14B_

*Fig.16*

*Fig.17A*

*Fig.17B*

**RÉFÉRENCES CITÉES DANS LA DESCRIPTION**

**Documents brevets cités dans la description**

- US 6206315 B1
- US 20060124793 A1
- US 20110000996 A1
- US 20140263797 A1